# EUROPÄISCHE PATENTANMELDUNG

(11) **EP 0 872 436 A1**
(43) Veröffentlichungstag der Anmeldung: **21.10.1998**
(21) Anmeldenummer: 97119909.6
(22) Anmeldetag: 13.11.1997
(51) Int. Cl.: B65G 47/84

(54) **Verfahren zur Vereinzelung von Kleinformatigen Gegenständen und Vereinzelungsvorrichtung**

(30) Priorität: 16.04.1997 DE 19715949
(71) Anmelder: Pactec Verpackungsmaschinen-Fabrik Theegarten GmbH & Co. KG, 01237 Dresden (DE)
(72) Erfinder: Rost, Jörn, Dr.-Ing., 01257 Dresden (DE)
(74) Vertreter: Grünecker, Kinkeldey, Stockmair & Schwanhäusser Anwaltssozietät

(57) **Zusammenfassung**

Die Erfindung betrifft ein Verfahren zur Vereinzelung von kleinformatigen Gegenständen (2), insbesondere Süßwaren (2), und eine Vereinzelungsvorrichtung (40). Erfindungsgemäß werden die aufgestauten Gegenstände (2) von entlang einer Umfangsbahn vorzugsweise variabel beschleunigbaren Greifern (44) eines umlaufenden Greiferrads (46) ergriffen, zur Zuführung an eine Verarbeitungseinheit, vorzugsweise Verpackungseinheit.

## Beschreibung

Die vorliegende Erfindung betrifft ein Verfahren zur Vereinzelung von kleinformatigen Gegenständen, insbesondere Süßwaren, und deren Übergabe an eine nachgeordnete Verarbeitungseinheit, insbesondere eine Verpackungseinheit einer Verpackungsmaschine, gemäß einem Maschinentakt der Verarbeitungseinheit, wobei die Gegenstände stückweise auf einem Staubandförderer angeliefert werden und von einem in Förderrichtung unmittelbar nachfolgenden Zuteilbandförderer übernommen werden, wobei der Zuteilbandförderer bei geringerer Bandlaufgeschwindigkeit betrieben wird als der Staubandförderer, wodurch die Gegenstände auf dem Staubandförderer aufstauen und auf dem Zuteilbandförderer unter lückenloser Anordnung weitergefördert werden bis zu einer Übernahmeposition.

Die Erfindung betrifft weiter eine Vereinzelungsvorrichtung zur Vereinzelung von kleinformatigen Gegenständen, insbesondere Süßwaren, und zu deren Übergabe an eine nachgeordnete Verarbeitungseinheit, insbesondere eine Verpackungseinheit einer Verpackungsmaschine, gemäß einem Maschinentakt der Verarbeitungseinheit, mit einem Staubandförderer zur Ansammlung und Weiterförderung der Gegenstände mit einer ersten Fördergeschwindigkeit und einem zur Übernahme der Gegenstände von dem Staubandförderer geeignet angeordneten Zuteilbandförderer mit einer zweiten, langsameren Fördergeschwindigkeit zur regelmäßigen Positionierung der Gegenstände an einer Übernahmeposition.

Ein Verfahren und eine Vorrichtung der eingangs bezeichneten Art sind aus der EP-A-0 608 861 bekannt. Die dort beschriebene Vereinzelungsvorrichtung umfaßt eine aus mehreren abfolgend angeordneten Förderbändern bestehende Zuführvorrichtung, z.B. zur Verwendung in einer Verpackungsmaschine für Schokoladenriegel oder Bonbons, wobei die Umlaufgeschwindigkeit eines der Bänder, nämlich eines Zuteilbands, geringer ist als die Umlaufgeschwindigkeit des zugehörigen, stromauf davon angeordneten Bands, das als Stauband bezeichnet wird. Die Umlaufgeschwindigkeiten des Staubands und des Zuteilbands werden so aufeinander abgestimmt, daß die Gegenstände an dem Übergang zwischen den beiden Bändern aufstauen und auf dem Zuteilband lückenlos aneinanderliegen.

Vom Zuteilband aus müssen die Gegenstände unter regelmäßigen Abständen abgegeben und auf hohe Geschwindigkeit beschleunigt werden, um synchron an eine Verpackungseinheit einer Hochleistungsverpackungsmaschine mit sehr hoher Maschinentaktzahl übergeben zu werden. Dafür ist in der bekannten Vorrichtung ein Beschleunigungsband vorgesehen, das die von dem Zuteilband abgegebenen Gegenstände aufnimmt und sie mit wesentlich höherer Bandumlaufgeschwindigkeit weitertransportiert. Aufgrund des abrupten Geschwindigkeitswechsels an der Übergabestelle zwischen dem Zuteilband und dem Beschleunigerband ist eine sichere Lage der Gegenstände auf dem Beschleunigungsband nicht sichergestellt, da diese abhängig von ihrer Form und Größe ins Rutschen, Rollen oder Taumeln geraten können. Die Freigabe der von einem auf das andere Band zu übertragenden Gegenstände hängt von der Reibung des Gegenstands auf den jeweiligen Bändern ab und ist damit nicht genau steuerbar. Daher ist die Lagegenauigkeit der Gegenstände auf dem Beschleunigungsband gering.

Dieses Problem wurde nach dem Stand der Technik dadurch gelöst, daß über dem Beschleunigungsband ein zwischen die auf dem Beschleunigungsband abgelegten Gegenstände eingreifender Mitnehmförderer angeordnet ist, dessen Mitnehmer zumindest im Bereich einer Übergabe von dem Beschleunigungsband zu einem Beschickungsförderer für die Verpackungsmaschine in Kontakt mit den Gegenständen sind. Diese Vorrichtung ist jedoch in ihrem Aufbau sehr kompliziert und besitzt ein hohes Raumerfordernis aufgrund der vielen Bandfördervorrichtungen und des zusätzlichen Mitnehmförderers. Außerdem ist aufgrund der vorgegebenen Abstände zwischen den Mitnehmern des Mitnehmförderers eine Anpassung an Gegenstände unterschiedlicher Größe sehr aufwendig.

Aus der WO 93/25440 ist eine Fördervorrichtung für Bonbons bekannt, die ein um eine stationäre Mittelachse rotierendes Greiferrad aufweist, an dem eine Mehrzahl schwenkbarer, kurvengesteuerter Haltebackenpaare angebracht ist zum Erfassen und Übergeben der von einem kontinuierlichen Massestrang durch eine Schneideinrichtung abgetrennten Bonbons an ein Übergaberad. Da bei dieser Lösung der zu greifende Gegenstand unmittelbar an der Übergabeposition von einem Massestrang abgeschnitten wird, befaßt sie sich nicht mit dem Problem der Vereinzelung von in unregelmäßiger Reihenfolge angelieferten Gegenständen, die unter starker Beschleunigung und unter Beibehaltung einer vorbestimmten festen Lagebeziehung an eine Verarbeitungsmaschine mit hohem Maschinentakt übergeben werden müssen.

Zur Lösung der oben genannten Probleme ist es die Aufgabe der vorliegenden Erfindung, ein Verfahren und eine Vorrichtung der eingangs genannten Art zu schaffen, bei denen die Vereinzelung und Beschleunigung der Gegenstände unter Beibehaltung ihrer festen Lagebeziehung auf einfacherere, zuverlässigere und insbesondere konstruktiv weniger aufwendigere Weise gelöst wird.

Erfindungsgemäß wird diese Aufgabe gelöst durch ein Verfahren der eingangs genannten Art, das sich dadurch auszeichnet, daß an der Übernahmeposition die Gegenstände von an schwenkbaren Greiferarmpaaren angebrachten Greifern eines sich drehenden Beschleunigerrads ergriffen werden, wobei die Greiferarmpaare derart geschwenkt werden, daß eine tangentiale Bewegungsgeschwindigkeit der Greifer an der Übernahmeposition mit einer Fördergeschwindigkeit der Gegenstände übereinstimmt und nach Ergreifen der Gegenstände ansteigt zur Erzielung der Synchronisierung für die Übergabe an die Verarbeitungsmaschine.

Diese Aufgabe wird auch gelöst durch eine Vorrichtung der eingangs genannten Art, die sich daduch auszeichnet, daß ein Beschleunigerrad vorgesehen ist mit einer Vielzahl von mit Greifern versehenen Greiferarmpaaren, die jeweils schwenkbar entlang eines um eine Drehachse des Beschleunigerrads konzentrischen Kreisbogens angebracht sind, wobei eine Schwenkbewegung der Greiferarmpaare derart gesteuert ist, daß eine Tangentialbewegungsgeschwindigkeit der Greifer an der Übernahmeposition mit einer Fördergeschwindigkeit der Gegenstände übereinstimmt und nach Ergreifen der Gegenstände ansteigt zur Erzielung der Synchronisierung mit dem Maschinentakt der Verarbeitungsmaschine.

Die erfindungsgemäßen Lösungen weisen den Vorteil auf, daß das nach dem Stand der Technik erforderliche, einen großen Raum einnehmende Beschleunigungsband mit dem zusätzlichen Mitnehmerförderer entfallen kann, da eine Beschleunigung der Gegenstände nach der Übertragung in die Greifer des Beschleunigerrads erfolgt. Die erfindungsgemäße Vorrichtung bzw. das erfindungsgemäße Verfahren sind universell einsetzbar für die Förderung und Vereinzelung von verschiedenen Arten stückweise angelieferter Gegenstände mit unterschiedlichen Dimensionen möglich, da deren Positionierung durch die abstandslose Aufstauung vor dem Ergreifen durch das Beschleunigerrad bestimmt wird, anstelle einer Korrektur der Lageabweichung auf dem Beschleunigungsband entsprechend einem Abstand der Mitnehmer der eingangs beschriebenen herkömmlich bekannten Vorrichtung.

Die Schwenkbarkeit der Greiferarme ermöglicht, daß zur Übergabe der Gegenstände in die Greifer diese die gleiche Tangentialgeschwindigkeit wie der zu ergreifende Gegenstand aufweist, während die entsprechende Tangentialgeschwindigkeit bei starr, nicht schwenkbar angebrachten Greiferarmen wesentlich höher wäre. Die Beschleunigung der Artikel erfolgt erst, wenn sie sicher im Greifer gehalten werden.

In einer vorteilhaften Weiterbildung des erfindungsgemäßen Verfahrens bzw. Vorrichtung ist ein Sensor vorgesehen, der die Lage des Gegenstands an einer vorbestimmten Position vor der Übergabeposition registriert und daraufhin wird der Zuteilbandförderer so gesteuert, daß der Gegenstand im richtigen Zeitpunkt an der Übernahmeposition zur Aufnahme durch den Greifer positioniert wird.

In einer weiteren vorteilhaften Weiterbildung ist eine Saugvorrichtung unter einem Band des Zuteilbandförderers vorgesehen, wobei die durch das Band hindurchströmende Ansaugluft die Haftung der Gegenstände auf dem Band verstärkt und damit bei Änderungen der Bandlaufgeschwindigkeit eine Lageveränderung der Gegenstände verhindert.

Weitere vorteilhafte Weiterbildungen der Erfindung gehen aus den Unteransprüchen hervor.

Nachfolgend wird eine Ausführungsform der vorliegenden Erfindung beispielhaft anhand der begleitenden Zeichnungen näher erläutert und beschrieben. In den Zeichnungen zeigen:
- Fig. 1: eine schematische Seitenansicht einer erfindungsgemäßen Vereinzelungsvorrichtung;
- Fig. 2: eine vergrößerte Darstellung eines in der Fig. 1 gezeigten Beschleunigerrads zur Veranschaulichung des Greifvorgangs; und
- Fig. 3: eine der Fig. 2 entsprechende Darstellung einer bezüglich der Unterstützung des Gegenstands an der Übernahmeposition modifizierten Ausführungsform.

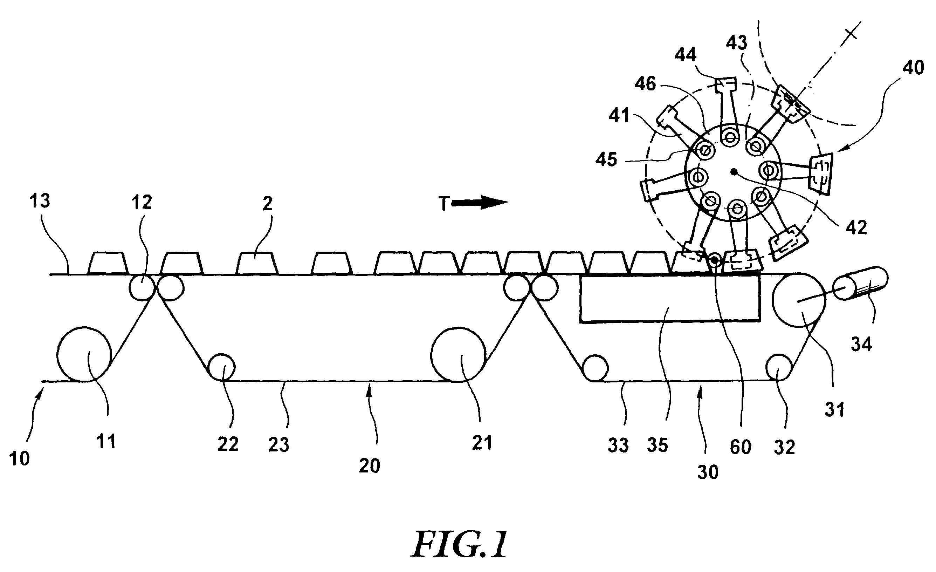

Die in Fig. 1 dargestellte erfindungsgemäße Ausführungsform umfaßt eine Bandförderungsvorrichtung 10 zur stückweisen Anlieferung und Bereitstellung von kleinformatigen Gegenständen, wie Süßwaren oder Bonbons. Die Bandförderungsvorrichtung 10 besitzt ein um Umlaufwalzen 12 umlaufendes Band 13, das über eine Antriebswalze 11 angetrieben wird.

In Verlängerung des Bandförderwegs der Bandfördervorrichtung 10 grenzt unmittelbar ein Staubandförderer 20 an, bei dem ein Band 23 um Umlaufwalzen 22 läuft und durch eine Antriebswalze 21 angetrieben wird.

Wiederum in Verlängerung des Förderwegs des Staubandförderers 20 ist unmittelbar angrenzend ein Zuteilbandförderer 30 vorgesehen, bei dem ein Band 33 um Umlaufwalzen 32 läuft und durch eine Antriebswalze 31 angetrieben wird. Die Antriebswalze 31 ist mit einem Motor 34, bei dem es sich insbesondere um einen Servomotor oder Schrittmotor handelt, gekoppelt.

In der Regel handelt es sich bei dem Band 33 um ein gelochtes oder geschlitztes Band aus luftundurchlässigem Material, z.B. aus kunststoffbeschichtetem Gewebe, oder es werden zwei parallele Bänder verwendet, zwischen denen ein Spalt das Ansaugen der Gegenstände erlaubt.

Über dem Zuteilbandförderer 30 ist ein Beschleunigerrad 40 mit einer horizontal und senkrecht zur Förderrichtung T des Zuteilbandförderers angeordneten Drehachse 42 vorgesehen, das eine Vielzahl (in der vorliegenden Ausführungsform acht) von Greiferarmpaaren 41 besitzt. Jeder Greiferarm ist an seinem distalen Ende mit einem Greifer 44 versehen. Die Greiferarme 41 sind unter regelmäßigen Abständen entlang einer zur Drehachse 42 des Beschleunigerrads 40 konzentrischen Kreislinie 43 jeweils schwenkbar an einem Gehäuseköper 46 angebracht. Die Schwenkachsen der Greiferarme sind zur Drehachse des Beschleunigerrads parallel. Innerhalb des Gehäusekörpers 46 ist eine nicht gezeigte Mechanik zum Verschwenken der Greiferarme in Abhängigkeit von der Drehstellung des Beschleunigerrads 40 vorgesehen. Diese Mechanik kann dem Fachmann bekannte Kurvenfolgergetriebe enthalten.

Die Arme eines jeden Armpaares sind jeweils entlang ihrer Schwenkachse axial verschiebbar. In dem Gehäuse 46 ist weiter ein Mechanismus angeordnet, der die Arme axial zueinander hin verschiebt zum Ergreifen eines Gegenstands auf dem Zuteilbandförderer 30.

Ein Beispiel für ein zur Verwendung in der vorliegenden Erfindung geeignetes Getriebe ist in der eingangs genannten WO 93/25440 gezeigt.

Über dem Zuteilbandförderer 30 ist in der Nähe einer Übernahmeposition, an der die Gegenstände auf dem Band 33 von den Greifern 44 ergriffen und abtransportiert werden, eine Sensorvorrichtung 60, vorzugsweise in der Form eines Lichtsensors, vorgesehen.

Unterhalb der Auflagefläche des Bandes 33 des Zuteilbandförderers 30 ist eine Ansaugvorrichtung 35 vorgesehen zum Ansaugen von Luft durch das Band 33 hindurch, um eine verstärkte Haftung der Gegenstände 2 auf diesem Band zu erzielen. Die Luftansaugvorrichtung kann sich wie gezeigt bis unter die Übernahmeposition erstrecken oder bereits in Bandlaufrichtung gesehen vorher enden. Im ersteren Fall kann eine Ansaugsteuervorrichtung (nicht gezeigt) vorgesehen werden, die die Luftansaugung im Zeitpunkt der Übernahme der Gegenstände durch die Greifer unterbricht.

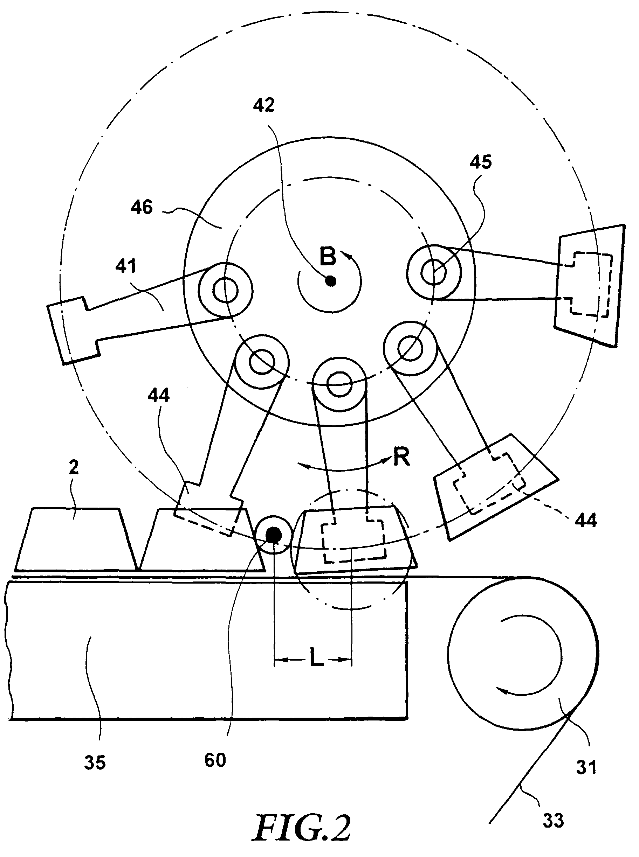

Nachfolgend wird der Betrieb der in Fig. 1 gezeigten Vereinzelungsvorrichtung beschrieben. Für die Erläuterung der Schwenkbewegung der Greiferarme wird auf Fig. 2 Bezug genommen.

Zur stückweisen Anlieferung der einzelnen Gegenstände wird die erste Bandfördervorrichtung 10 bei einer ersten Umlaufgeschwindigkeit betrieben. Die hierbei angelieferten Gegenstände 2 werden auf den Staubandförderer 20 übertragen, dessen Band, beispielsweise (jedoch nicht notwendigerweise) mit einem zu der Umlaufgeschwindigkeit des Anlieferungsbands gleichen Geschwindigkeit umläuft. Von dem Staubandförderer 20 werden die Gegenstände auf den Zuteilbandförderer 30 übertragen, dessen durchschnittliche Bandlaufgeschwindigkeit geringer ist als die des Staubandförderers. Dadurch stauen sich die angelieferten Gegenstände an der Übertragungsstelle zwischen dem Staubandförderer und dem Zuteilbandförderer, wobei eine im wesentlichen lückenlose Aneinanderreihung der Gegenstände auftritt. Auf dem Staubandförderer 20 ist ausreichend Platz vorhanden, den Stall der Gegenstände aufzunehmen. Auf dem Zuteilbandförderer werden die lückenlos aneinandergereihten Gegenstände zu einer Übernahmeposition, die sich im wesentlichen senkrecht unterhalb der Achse 42 des Beschleunigerrads befindet, transportiert, an der die Gegenstände durch die Greifer 44 erfaßt und weiterbefördert werden.

Die Förderung der Gegenstände auf dem Zuteilbandförderer 30 kann kontinuierlich oder auch intermittierend erfolgen. Durch den optischen Sensor 60 wird die Lage eines angeförderten Gegenstandes registriert und im weiteren Verlauf wird der Bandlauf des Zuteilbandförderers während des Transportweges L mittels des Servo- oder Schrittmotors so gesteuert, daß der Gegenstand zum Zeitpunkt der Übernahme im wesentlichen mittig an der Übernahmestelle positioniert wird und seine Fördergeschwindigkeit im Zeitpunkt der Übernahme im wesentlichen der Tangentialgeschwindigkeit der Greifer entspricht. Diese wiederum sollte zweckmäßigerweise dem Produkt aus mittlerer Gegenstandslänge und Arbeitsfrequenz der Maschine entsprechen.

In einer alternativen Ausführungsform erfolgt die Positionserfassung des letzten Gegenstands vor der Übernahmeposition mit einer nicht dargestellten, in Flußrichtung angeordneten und ausgerichteten absoluten Entfernungsmeßvorrichtung, die die Lage des Gegenstands unabhängig von seiner Größe oder einer Lückenbildung zwischen zwei aufeinanderfolgenden Gegenständen messen kann, um entsprechend den Bandlauf des Zuteilbandförerers 30 zu steuern. Diese Absolutentfernungsmeßvorrichtung kann beispielsweise Lasersensoren enthalten.

Durch die oben beschriebene Steuerung des Bandlaufs des Zuteilbandförderes treten kurzfristiges Beschleunigen und Abbremsen des Bandes 33 und somit der darauf angeordneten Gegenstände 30 auf. Durch Luftansaugen durch das Band 33 mittels der Luftansaugvorrichtung 35 wird eine erhöhte Haftung der Gegenstände auf dem Band erzeugt, so daß die Gefahr des Verrutschens und damit gegebenenfalls eine Fehlpositionierung der Gegenstände vermieden wird. Die Luftansaugvorrichtung kann sich wie in Fig. 1 gezeigt bis unter die Übernahmeposition, an der der Gegenstand von den Greifern erfaßt wird, erstrecken. In diesem Fall ist es bevorzugt, die Luftansaugung so zu steuern, daß im Zeitpunkt des Ergreifens und Abtransportierens des Gegenstands durch die Greifer des Beschleunigerrads der Ansaugluftstrom unterbrochen wird und somit die erhöhte Haftung der Gegenstände auf dem Band kurzfristig aufgehoben wird. Dies kann erreicht werden durch taktsynchrones, beispielsweise kurvengesteuertes Abdecken von Öffnungen in der Ansaugvorrichtung 35 unterhalb des Auflagebereichs des Bandes 33.

An der Übernahmeposition kann, wie zuvor beschrieben wurde, der zu ergreifende Gegenstand sich mit konstanter Geschwindigkeit bewegen, oder bei intermittierendem Bandbetrieb stationär stehen. Da das Beschleunigerrad die ergriffenen Gegenstände an eine mit einem hohen Maschinentakt arbeitende Verpackungsvorrichtung übergeben muß, ist seine Tangentialgeschwindigkeit an einem der Position der Greifer (bzw. der Übernahmeposition) entsprechenden Umfangskreis in jedem Fall höher als die Geschwindigkeit der zu ergreifenden Gegenstände. Zur Synchronisierung der Geschwindigkeit der Greifer und des zu ergreifenden Gegenstands wird kurz vor Erreichen der Übernahmeposition das entsprechende Paar von Greiferarmen in Umlaufrichtung des Beschleunigerrads verschwenkt. Sobald die Greifer die Übernahmeposition erreicht haben, wird das Greiferarmpaar in der der Laufrichtung des Beschleunigerrads entgegengesetzten Richtung geschwenkt, wodurch sich eine effektive Geschwindigkeit der Greifer als Differenz der Tangentialgeschwindigkeit des Beschleunigerrads am Ort des Gegenstands und der Schwenkgeschwindigkeit des Greiferarms ergibt. Während die Greifer für eine kurze Zeit synchron zu dem zu ergreifenden Gegenstand gehalten werden, werden die Greiferarmpaare entlang ihrer Halteachsen zueinander hin verschoben, um den zu ergreifenden Gegenstand zwischen den Greifern einzuklemmen und zu erfassen. Anschließend wird der Gegenstand vom Band 33 abgehoben, wobei nun, nachdem die Gegenstände sicher im Greifer gehalten werden, die notwendige Beschleunigung zur Synchronisierung und Übergabe an das Übernahmerad der Verpackungsvorrichtung erfolgt durch erneutes Schwenken der Greiferarmpaare in Umlaufrichtung.

Unmittelbar nach dem Entnehmen des Gegenstands vom Band 33 entsteht eine Lücke zum nachfolgenden Gegenstand, die es dem optischen Sensor 60 ermöglicht, auch die Lage des nachfolgenden Gegenstands zu registrieren und im weiteren Verlauf während des Transportweges L den Bandlauf des Zuteilförderers so zu steuern, daß auch dieser Gegenstand sich zum Zeitpunkt der Übernahme mit der gewünschten Geschwindigkeit an der Übernahmeposition befindet, worauf ein neuer Zyklus des Ergreifens und Abtransportierens des Gegenstands durch das Beschleunigerrad beginnt.

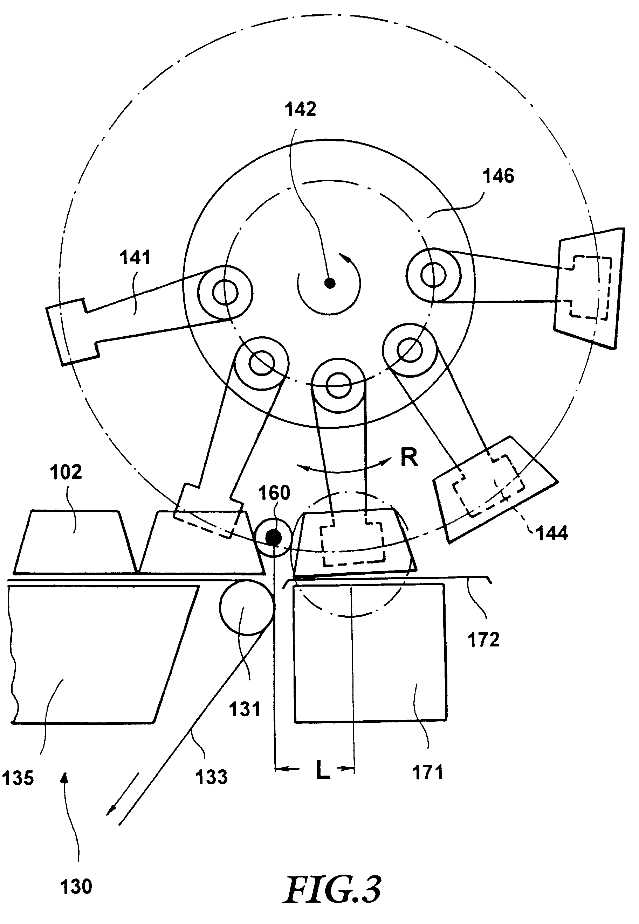

In Fig. 3 wird eine alternative Ausführungsform gezeigt, wobei zu der in den Figuren 1 und 2 gezeigten Ausführungsform gleiche Elemente mit gleichen, jedoch um 100 erhöhten Bezugzeichen bezeichnet sind. Diese alternative Ausführungsform unterscheidet sich lediglich dadurch von der in den Figuren 1 und 2 gezeigten Ausführungsform, daß an der Übernahmeposition ein Halteblech 172 vorgesehen ist, auf das die von dem Zuteilbandförderer 130 angelieferten Gegenstände geschoben werden. Unterhalb des Halteblechs 172 ist wieder eine Ansaugvorrichtung 171 vorgesehen. Die Funktion der in Fig. 3 dargestellten Ausführungsform unterscheidet sich nicht von der zuvor beschriebenen Anordnung.

Durch die Erfindung werden die nach dem Stand der Technik auftretenden Lagetoleranzen der Gegenstände vermieden, da hohe Beschleunigungsgeschwindigkeiten der auf dem Bandförderer liegenden Gegenstände nicht auftreten, sondern die Beschleunigung effektiv erst nach Ergreifen der Gegenstände durch die Greiferarme durchgeführt wird. Die Gegenstände können durchgängig auf dem Band des Zuteilbandförderers unter Ansaughalterung bis zur Übergabe an das Beschleunigerrad gehalten werden, so daß ihre sichere Positionierung auf dem Band 33 gewährleistet ist. Durch den Wegfall eines nach dem Stand der Technik erforderlichen Beschleunigerbands und eines Mitnehmerförderers wird eine große Platzersparnis und somit auch eine Kostenersparnis erzielt.

## Patentansprüche

1. Verfahren zur Vereinzelung von kleinformatigen Gegenständen, insbesondere Süßwaren, und deren Übergabe an eine Verarbeitungseinheit, insbesondere eine Verpackungseinheit einer Verpackungsmaschine, gemäß einem Maschinentakt der Verarbeitungseinheit, wobei die Gegenstände stückweise auf einem Staubandförderer angeliefert werden und von einem in Förderrichtung unmittelbar nachfolgenden Zuteilbandförderer übernommen werden, wobei der Zuteilbandförderer bei geringerer Bandlaufgeschwindigkeit betrieben wird als der Staubandförderer, wodurch die Gegenstände auf dem Staubandförderer aufstauen und auf dem Zuteilbandförderer unter lückenloser Anordnung weitergefördert werden bis zu einer Übernahmeposition, **dadurch gekennzeichnet,** daß an der Übernahmeposition die Gegenstände (2) von an schwenkbaren Greiferarmpaaren (41) angebrachten Greifern (44) eines sich drehenden Beschleunigerrads (40) ergriffen werden, wobei die Greiferarmpaare (41) derart geschwenkt werden, daß eine tangentiale Bewegungsgeschwindigkeit der Greifer (44) an der Übernahmeposition mit einer Fördergeschwindigkeit der Gegenstände (2) übereinstimmt und nach Ergreifen der Gegenstände (2) ansteigt, zur Erzielung einer Synchronisierung für eine Übergabe an die Verarbeitungseinheit.

2. Verfahren gemäß Anspruch 1, **dadurch gekennzeichnet,** daß die Lage eines Gegenstands (2) vor der Übernahmeposition detektiert wird und daß anschließend der Bandvorschub des Zuteilbandförderers (30) so gesteuert wird, daß der Gegenstand (2) zum Übernahmezeitpunkt an der Übernahmeposition angeordnet wird.

3. Verfahren gemäß Anspruch 1 oder 2, **dadurch gekennzeichnet,** daß wenigstens auf Teilbereichen des Zuteilbandförderers (30) durch das Band hindurch Luft angesaugt wird, um die darauf lose liegenden Gegenstände fester zu halten und gegen Verrutschen zu sichern.

4. Verfahren gemäß zumindest einem der vorhergehenden Ansprüche 1 bis 3, **dadurch gekennzeichnet,** daß der Zuteilbandförderer (30) mittels eines Schrittmotors oder Servomotors (34) angetrieben wird zur Verbesserung der Lagegenauigkeit der Gegenstände (2) an der Übernahmeposition.

5. Verfahren gemäß zumindest einem der vorhergehenden Ansprüche 1 bis 4, **dadurch gekennzeichnet,** daß an der Übernahmeposition eine stationäre Übergabeplatte (172) vorgesehen wird, auf die die Gegenstände (2) von dem Zuteilbandförderer (130) geschoben werden.

6. Verfahren gemäß Anspruch 5, **dadurch gekennzeichnet,** daß die Gegenstände (2) auf der Übergabeplatte (172) angesaugt werden.

7. Verfahren gemäß Anspruch 3 oder 6, **dadurch gekennzeichnet,** daß die Ansaugung bei Ergreifen der Gegenstände (2) durch die Greifer (44) unterbrochen wird.

8. Verfahren gemäß zumindest einem der vorhergehenden Ansprüche 1 bis 7, **dadurch gekennzeichnet,** daß die Lage der Gegenstände (2) auf dem Zuteilbandförderer (30) unabhängig von einer Lückenbildung zwischen den Gegenständen (2) durch eine in Verlängerung der Transportrichtung des Zuteilbandförderers (30) angeordnete Entfernungsmeßvorrichtung (60) bestimmt wird.

9. Vereinzelungsvorrichtung zur Vereinzelung von kleinformatigen Gegenständen, insbesondere Süßwaren, und zu deren Übergabe an eine Verarbeitungseinheit, insbesondere eine Verpackungseinheit einer Verpackungsmaschine, gemäß einem Maschinentakt der Verarbeitungseinheit, mit:
einem Staubandförderer zur Ansammlung und Weiterförderung der Gegenstände mit einer ersten Fördergeschwindigkeit, und
einem zur Übernahme der Gegenstände von dem Staubandförderer geeignet angeordneten Zuteilbandförderer mit einer zweiten, langsameren Fördergeschwindigkeit zur regelmäßigen Positionierung der Gegenstände an einer Übernahmeposition, **dadurch gekennzeichnet,** daß ein Beschleunigerrad (40) vorgesehen ist mit einer Vielzahl von mit Greifern (44) versehenen Greiferarmpaaren (41), die jeweils schwenkbar entlang eines um eine Drehachse (42) des Beschleunigerrads (40) konzentrischen Kreisbogens (43) angebracht sind, wobei eine Schwenkbewegung der Greiferarmpaare (41) derart gesteuert ist, daß eine Tangentialbewegungsgeschwindigkeit der Greifer (44) an der Übernahmeposition mit einer Fördergeschwindigkeit der Gegenstände (2) übereinstimmt und nach Ergreifen der Gegenstände (2) ansteigt zur Erzielung einer Synchronisierung mit einem Maschinentakt der Verarbeitungseinheit.

10. Vereinzelungsvorrichtung gemäß Anspruch 9, **dadurch gekennzeichnet,** daß ein Sensor (60) vorgesehen ist, mit dem die Lage eines Gegenstands (2) vor der Übernahmeposition detektierbar ist.

11. Vereinzelungsvorrichtung gemäß Anspruch 10, **dadurch gekennzeichnet,** daß der Zuteilbandförderer (30) in Abhängigkeit von dem Detektionsergebnis des Sensors (60) steuerbar ist.

12. Vereinzelungsvorrichtung gemäß Anspruch 11, **dadurch gekennzeichnet,** daß ein Schrittmotor oder Servomotor (34) zum Antrieb des Zuteilbandförderers (30) vorgesehen ist.

13. Vereinzelungsvorrichtung gemäß einem der Ansprüche 9-12, **dadurch gekennzeichnet,** daß unter einer Auflagefläche der Gegenstände (2) auf einem Band (33) des Zuteilbandförderers (30) eine Luftansaugvorrichtung (35) vorgesehen ist.

14. Vereinzelungsvorrichtung gemäß Anspruch 13, **dadurch gekennzeichnet,** daß sich die Luftansaugvorrichtung (33) bis zu einer Stelle unterhalb der Übernahmeposition, an der die Gegenstände (2) an das Beschleunigerrad (40) übergeben werden, erstreckt.

15. Vereinzelungsvorrichtung gemäß Anspruch 13, **dadurch gekennzeichnet**, daß sich die Luftansaugvorrichtung bis zu einer Stelle in Flußrichtung vor der Übernahmeposition erstreckt.

16. Vereinzelungsvorrichtung gemäß Anspruch 14, **dadurch gekennzeichnet,** daß eine Luftansaugsteuerungsvorrichtung vorgesehen ist, mit der ein Ansaugen und taktsynchrones Unterbrechen der Ansaugung zum Zeitpunkt der Übergabe der Gegenstände an das Beschleunigerrad durchführbar ist.

17. Vereinzelungsvorrichtung gemäß einem der Ansprüche 9-16, **dadurch gekennzeichnet,** daß an der Übernahmeposition eine Übergabeplatte (172) vorgesehen ist, auf die die Gegenstände von dem Zuteilbandförderer (130) schiebbar sind.

18. Vereinzelungsvorrichtung gemäß Anspruch 18, **dadurch gekennzeichnet,** daß unter einer Auflagefläche der Gegenstände auf der Übergabeplatte (172) eine Luftansaugvorrichtung (171) vorgesehen ist.

19. Vereinzelungsvorrichtung gemäß Anspruch 18, **dadurch gekennzeichnet,** daß eine Luftansaugsteuerungsvorrichtung vorgesehen ist, mit der ein Ansaugen und taktsynchrones Unterbrechen der Ansaugung zum Zeitpunkt der Übergabe der Gegenstände an das Beschleunigerrad durchführbar ist.

20. Vereinzelungsvorrichtung gemäß Anspruch 9, **dadurch gekennzeichnet,** daß eine Entfernungsmeßvorrichtung (60) in Verlängerung der Transportrichtung des Zuteilbandförderers (30) nach der Übergabeposition vorgesehen ist, mit der ein Ausmessen der Lage der Gegenstände unabhängig von einer Lückenbildung der Gegenstände auf dem Zuteilbandförderer (30) möglich ist.
